# EUROPÄISCHE PATENTSCHRIFT

(11) **EP 3 513 100 B1**
(45) Veröffentlichungstag und Bekanntmachung des Hinweises auf die Patenterteilung: **16.09.2020**
(21) Anmeldenummer: 17835676.2
(22) Anmeldetag: 21.12.2017
(51) Int. Cl.: F16H 57/031, F16H 57/033

(54) **WINKELGETRIEBEMOTOR**
ANGLE GEARED MOTOR
MOTORÉDUCTEUR ANGULAIRE

(30) Priorität: 22.12.2016 DE 102016226046
(43) Veröffentlichungstag der Anmeldung: 24.07.2019
(73) Patentinhaber: Siemens Aktiengesellschaft, 80333 München (DE)
(72) Erfinder: BOEING, Georg, 72108 Rottenburg (DE); BIHR, Jens, 73111 Lauterstein-Nenningen (DE)
(86) Internationale Anmeldenummer: PCT/EP2017/084018
(87) Internationale Veröffentlichungsnummer: WO 2018/115240

(56) Entgegenhaltungen:
- EP-A2- 1 045 168
- DE-A1- 10 312 941
- DE-C1- 4 213 203

## Beschreibung

Prinzipiell umfasst der Begriff Winkelgetriebe alle Getriebe, die eine Umlenkung des Drehmoments um einen Winkel, insbesondere von 90 Grad, bewirken, wie Kegelrad- und Schneckengetriebe. Dabei unterscheidet man Winkelgetriebe ohne Achsversatz und Winkelgetriebe mit Achsversatz: Bei Winkelgetrieben ohne Achsversatz schneiden sich die Achsen der winklig zueinander stehenden An- und Abtriebswellen in einem Schnittpunkt. Bei Winkelgetrieben mit Achsversatz haben die Achsen der winklig zueinander stehenden An- und Abtriebswellen keinen gemeinsamen Schnittpunkt, sondern sie kreuzen sich lediglich. Dabei sind Kegelradgetriebe mit Achsversatz auch als Hypoidgetriebe bekannt. So ein Winkelgetriebemotor ist aus der DE10312941A bekannt.

Bei Winkelgetrieben mit Achsversatz, z.B. Schnecken- und Hypoidgetrieben, muss das Spiel zwischen einem auf einer antreibenden Welle angeordneten Ritzel und einem auf einer abtreibenden Welle angeordneten Zahnrad, z. B. einem Tellerrad, genau eingestellt werden; die Toleranzen liegen dabei im Bereich von Zehntel Millimetern. Beim Schneckengetriebe spricht man dabei von einer Tragbildeinstellung, beim Kegelradgetriebe von einer Spieleinstellung. Bei Winkelgetrieben mit Achsversatz ist der Achsversatz zwischen dem Motor-Ritzel und dem Zahnrad, der auch als Achsabstand bezeichnet wird, entscheidend für den Wirkungsgrad und den möglichen Übersetzungsbereich:
- Mit zunehmendem Achsabstand (Extremfall Schneckengetriebe) sinkt der Wirkungsgrad η (hoher Gleitanteil neben Wälzen), der realisierbare Übersetzungsbereich [i_min; i_max] wächst aber (i_max bis 100!).
- Mit abnehmendem Achsversatz (Extremfall Kegelradgetriebe mit Achsversatz = 0) wächst der Wirkungsgrad η (abnehmender Gleitanteil neben Wälzen), der realisierbare Übersetzungsbereich [i_min; i_max] sinkt aber (beim Kegelradgetriebe i_min ca. 1,5 und i_max ca. 6).

Schneckengetriebe sind die übliche Lösung für ein Winkelgetriebe, können aber den Nachteil aufweisen, dass aufgrund eines hohen Gleitanteils ihr Wirkungsgrad relativ klein ist. Kegelradgetriebe ohne Achsversatz weisen den Nachteil auf, dass der realisierbare Übersetzungsbereich begrenzt ist. Zwar könnte man auch mit dem Getriebetyp "Kegelradgetriebe ohne Achsversatz" jede gewünschte Übersetzung erreichen, nämlich indem man mehrere Getriebestufen einsetzt, diese Konstruktion wäre aber signifikant teurer als ein einstufiges Hypoidgetriebe.

Bei Hypoidgetrieben ist wie bei den Kegelradgetrieben ohne Achsversatz eine genaue Einstellung des Spiels zwischen dem Zahnrad und dem Ritzel entscheidend für den Wirkungsgrad, die Tragfähigkeit, die Geräuschentwicklung und die Lebensdauer des Getriebes. Die erforderliche Genauigkeit der jeweiligen Position von Ritzel und Zahnrad liegt bei < ± 1/10 mm.

Winkelgetriebemotoren mit Achsversatz werden unter anderem in der Fördertechnik eingesetzt, z.B. zum Antrieb einer Rollenbahn zum Transport von Stückgütern wie Paketen, Koffern, Paletten oder Kisten.

DE102009005344A1 (SEW-Eurodrive) 05.08.2010 beschreibt einen Winkelgetriebemotor mit einer sog. Helikon-Verzahnung des Ritzels 1. Dabei erfolgt eine Einstellung der Position des Zahnrads 6 in axialer Richtung durch ein Einlegen von PassScheiben 518, 521 zwischen das Wälzlager 11, 25 und den Sicherungsring 12, 88 des Wälzlagers; dadurch kann die axiale Lage des Zahnrads im Bereich von < ± 1/10 mm genau eingestellt werden. Eine nachträgliche Einstellung der Position des Motorritzels in axialer Richtung ist nicht nötig, da die zylindrische Form des Ritzels (Helikon) und das plane Tellerrad eine Toleranz von ± 5/10 mm erlauben.

Aufgabe der vorliegenden Erfindung ist es, einen verbesserten Winkelgetriebemotor anzugeben.

Diese Aufgabe wird erfindungsgemäß durch einen Winkelgetriebemotor, insbesondere einen Hypoid-Getriebemotor, gelöst, aufweisend ein Getriebegehäuse, in dem ein Zahnrad drehbar gelagert ist, ein getriebeseitiges Motorlagerschild, durch das eine Motorwelle mit einem darauf befestigten Ritzel ragt, eine Schnittstelle zwischen dem Getriebegehäuse und dem getriebeseitigen Motorlagerschild, und gekennzeichnet durch einen im Motorlagerschild befestigten Stift, welcher als Drehpunkt zur Verdrehung des Getriebegehäuses relativ zum Motorlagerschild dient. Diese Aufgabe wird erfindungsgemäß außerdem durch ein Verfahren zum Einstellen eines definierten Spiels zwischen einem Ritzel und einem Zahnrad, insbesondere einem Tellerrad, eines Winkelgetriebemotors nach Anspruch 1, mit folgenden Schritten gelöst: Verdrehen des Getriebegehäuses, bis das Ritzel ohne Spiel an dem Zahnrad anliegt, wodurch eine Null-Position definiert ist; und Verdrehen des Getriebegehäuses aus der Null-Position um einen vorgegebenen Winkel um den als Drehpunkt wirkenden Stift, wobei die Winkelverdrehung dem definierten Spiel entspricht.

Die Spieleinstellung der Verzahnung erfolgt also mittels einer Anschlagmethode, vorzugsweise beim Anbau des Motors an das getriebeseitige Motorlagerschild. Die Montagezeit für einen Getriebemotor kann dadurch stark verkürzt werden. Eine aufwendige Einstellung des Spiels zwischen dem Ritzel und dem Zahnrad durch ein Einlegen von Passcheiben im Bereich der Lager ist somit unnötig.

Die Schnittstelle zwischen dem Getriebegehäuse und dem getriebeseitigen Motorlagerschild erlaubt eine Verdrehung des Getriebegehäuses gegenüber dem getriebeseitigen Motorlagerschild. Dabei kann das getriebeseitigen Motorlagerschild unmittelbar an dem Getriebegehäuse anliegen, es kann aber auch ein weiteres, die relative Drehung nicht behinderndes Bauteil, z.B. eine Öldichtung, zwischen dem getriebeseitigen Motorlagerschild und dem Getriebegehäuse angeordnet sein.

Es sind Winkelgetriebemotoren bekannt, welche ein einteiliges Gehäuse, umfassend einen würfelförmigen Gehäuseabschnitt, d.h. das eigentliche Getriebegehäuse, und einen zylindrischen Gehäuseabschnitt, d.h. das Motorschild, aufweisen. Da der zylindrische Gehäuseabschnitt die Position eines Elektromotors definiert, wird durch die Einteiligkeit die Position des zylindrischen Gehäuseabschnitts relativ zum würfelförmigen Gehäuseabschnitt und somit die radiale Lage eines auf einer im Elektromotor drehbar gelagerten Motorwelle angeordneten Ritzels in Bezug auf ein im würfelförmigen Gehäuseabschnitt drehbar gelagertes Zahnrad vorgegeben. Eine Änderung des Spiels zwischen dem Ritzel und einem im würfelförmigen Gehäuseabschnitt drehbar gelagerten Zahnrad kann somit nur dadurch erreicht werden, dass das Zahnrad axial verstellt wird, z.B. durch ein Einlegen von Passscheiben, was ein großer Aufwand ist. Außerdem können das Getriebe und der Motor nicht in zwei parallelen Montagelinien separat montiert und dann aneinander geflanscht werden, sondern der Motor muss um die aus dem Getriebe ragende Motorwelle aufgebaut werden, d.h. es existiert eine Begrenzung auf eine serielle Montagelinie.

Es sind außerdem Winkelgetriebemotoren bekannt, welche ein zweiteiliges Gehäuse, umfassend ein das eigentliche Getriebegehäuse bildenden würfelförmigen Gehäuseteil und ein einen getriebeseitigen Motorschild aufweisenden zylindrischen Gehäuseteil, aufweisen; beispielsweise beschreibt DE102012010789A1 (SEW-Eurodrive) 05.12.2013 ein solches Winkelgetriebe mit zwei Gehäuseteilen. Allerdings weisen diese bekannten zweiteiligen Winkelgetriebe keine Möglichkeit zur Verdrehung der beiden Gehäuseteile gegeneinander auf.

Die Erfindung schlägt demgegenüber ein zweiteiliges Gehäuse vor, bei dem die beiden Gehäuseteile gegeneinander verdrehbar sind: das eigentliche Getriebegehäuse und der getriebeseitige Motorschild sind durch eine Schnittstelle getrennt und um einen als Drehpunkt fungierenden Stift gegeneinander verdrehbar. Somit können das Getriebe mit dem Getriebegehäuse und der Motor mit dem Motorschild in zwei parallelen Montagelinien einzeln montiert und dann abschließend aneinander geflanscht werden; somit ist eine schnellere Montage möglich. Die Erfindung hat den weiteren Vorteil, dass eine genaue Einstellung eines definierten Spiels zwischen dem Ritzel und dem Zahnrad des Winkelgetriebes einfacher als bisher möglich ist.

Die Verdrehbarkeit des Getriebegehäuses relativ zum getriebeseitigen Motorschild ist dadurch möglich, dass die Befestigungsmittel zur Fixierung des Getriebegehäuses relativ zum getriebeseitigen Motorschild eine Drehbewegung innerhalb eines bestimmter Winkelbereichs erlauben, z.B. können durchgehenden Bohrlöcher, durch welche Befestigungsbolzen zur Fixierung des Getriebegehäuses am getriebeseitigen Motorschild geführt werden, als Langlöcher ausgebildet sein. Ist die gewünschte Position des Getriebegehäuses relativ zum getriebeseitigen Motorschild erreicht, werden die Befestigungsbolzen angezogen, so dass eine nicht verdrehbare Lage der beiden Gehäuseteile zueinander erreicht ist.

Vorteilhafte Ausgestaltungen und Weiterbildungen der Erfindung sind in den abhängigen Ansprüchen angegeben. Dabei kann das erfindungsgemäße Verfahren auch entsprechend den abhängigen Vorrichtungsansprüchen weitergebildet sein, und umgekehrt.

Gemäß einer bevorzugten Ausgestaltung des Verfahrens erfolgt das Verdrehen des Getriebegehäuses um einen vorgegebenen Winkel dadurch, dass das Getriebegehäuse bis zu einer korrespondierenden vorgegebenen Markierung auf einer Außenseite des getriebeseitigen Motorlagerschilds verdreht wird. Die vorgegebene Markierung, die auf dem Motorlagerschild sichtbar ist, wenn das Getriebegehäuse an dem Motorlagerschild anliegt, gibt die relative Position zwischen Motorlagerschild und Getriebegehäuse an, an der die Winkelverdrehung das gewünschte, definierten Spiel erzielt. Auf diese Weise kann die Lage des Getriebegehäuses relativ zum getriebeseitigen Motorschild wiederholbar definiert eingestellt werden.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: eine Schrägansicht eines Hypoid-Getriebemotors;
- Fig. 2: die Komponenten eines Hypoid-Getriebemotors;
- Fig. 3: eine Schrägansicht eines Motorlagerschilds;
- Fig. 4: eine Schrägansicht eines Elektromotors mit einem Motorlagerschild gemäß Fig. 3;
- Fig. 5: eine teiltransparente Sicht auf den Getriebemotor entlang der Motorwelle;
- Fig. 6: eine Schrägansicht eines mit einem Tellerrad kämmenden Ritzels;
- Fig. 7 bis 9: eine Baureihe mit drei verschiedenen Motorlagerschildern;
- Fig. 10: einen Hypoid-Getriebemotor als Antrieb einer Arbeitsmaschine;
- Fig. 11: eine Seitenansicht eines Hypoid-Getriebemotors mit einem ersten, größeren Achsversatz;
- Fig. 12: eine Draufsicht der Getriebemontageplatte gemäß Fig. 11;
- Fig. 13: eine Seitenansicht eines Hypoid-Getriebemotors mit einem zweiten, kleineren Achsversatz; und
- Fig. 14: eine Draufsicht der Getriebemontageplatte gemäß Fig. 13.

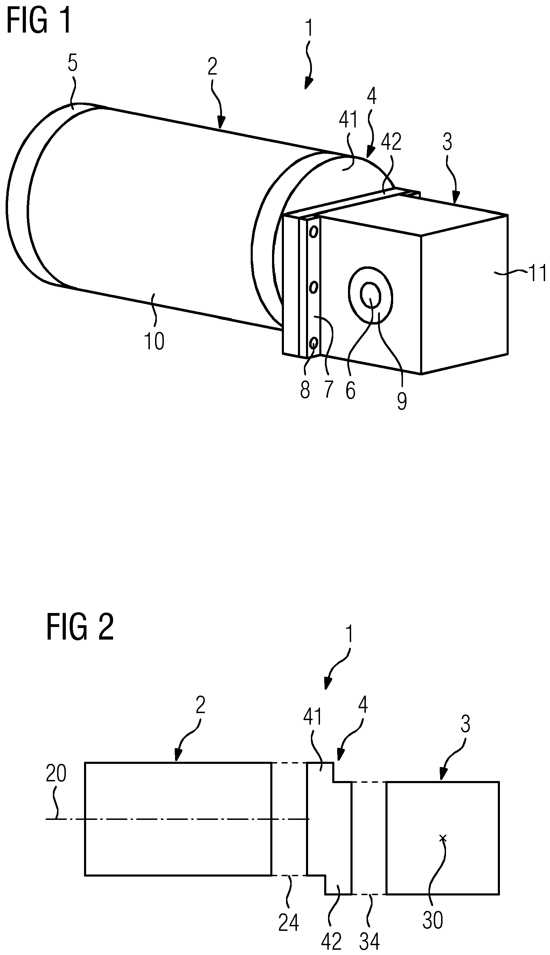

Fig. 1 zeigt eine Schrägansicht eines Hypoid-Getriebemotors 1, welcher einen Elektromotor 2 und ein Hypoidgetriebe 3 aufweist.

Der Elektromotor 2 weist ein zylinderförmiges Statorgehäuse 10 und zwei Motorlagerschilder, die an den beiden Stirnseiten des Statorgehäuses 10, die auch als A-Seite (Abtriebsseite) und B-Seite (Lüfterseite) bezeichnet werden, montiert sind. Dabei befindet sich das A-seitige Motorlagerschild 4 an der Abtriebsseite des Elektromotors 2, d.h. an der dem Getriebe 3 zugewandten Seite, und das B-seitige Motorlagerschild 5 an der Lüfterseite des Elektromotors 2, d.h. an der vom Getriebe 3 abgewandten Seite. Daher wird das A-seitige Motorlagerschild 4 auch als getriebeseitiges Motorlagerschild bezeichnet.

Das einstückig ausgebildete A-seitige Motorlagerschild 4 weist einen motorseitigen Abschnitt 41 sowie einen getriebeseitiger Abschnitt 42 auf. Der motorseitige Abschnitt 41, der als Abdeckung der getriebeseitigen Stirnseite des Statorgehäuses 10 dient, hat einen kreisrunden Umfang, entsprechend der Zylinderform des Statorgehäuses 10. Der getriebeseitige Abschnitt 42, der als Getriebemontageplatte oder Getriebeflansch dient, hat einen eckigen Umfang, entsprechend einer Quaderform des Getriebegehäuses 11.

Das Hypoidgetriebe 3 weist ein quaderförmiges Getriebegehäuse 11 auf, in dem eine ein Zahnrad tragende Abtriebswelle 6 gelagert ist, die gegenüber dem Getriebegehäuse 11 mithilfe eines Wellendichtrings 9 abgedichtet ist. Das Getriebegehäuse 11 weist an zwei gegenüberliegenden Seiten jeweils einen Flansch 7 mit Durchgangslöchern auf. Die beiden Flansche 7 liegen an dem getriebeseitige Abschnitt 42 des A-seitigen Motorlagerschilds 4 an und sind dort mithilfe von Verbindungsbolzen 8 befestigt. Dabei ist das Getriebegehäuse 11 auf der zum Elektromotor 2 gewandten Seite offen, um das Einführen einer Motorwelle des Elektromotors 2 in das Getriebegehäuse 11 zu ermöglichen, so dass ein auf die Motorwelle aufgestecktes Ritzel mit einem in dem Getriebegehäuse 11 drehbar gelagerten Zahnrad kämmt.

Fig. 2 zeigt Komponenten eines Hypoid-Getriebemotors 1, nämlich einen Elektromotor 2 mit einer in der Zeichenebene verlaufenden Rotorwellenachse 20, ein Hypoidgetriebe 3 mit einer senkrecht zur Zeichenebene verlaufenden Abtriebswellenachse 30, sowie ein zwischen dem Elektromotor 2 und dem Hypoidgetriebe 3 angeordnetes A-seitiges Motorlagerschild 4, welches einen motorseitigen Abschnitt 41 sowie einen getriebeseitiger Abschnitt 42 aufweist.

Die relative Montageposition des Elektromotors 2 und des A-seitigen Motorlagerschildes 4 ist durch die Strichlinien 24, die relative Montageposition des Hypoidgetriebes 3 und des A-seitigen Motorlagerschildes 4 durch die Strichlinien 34 angedeutet.

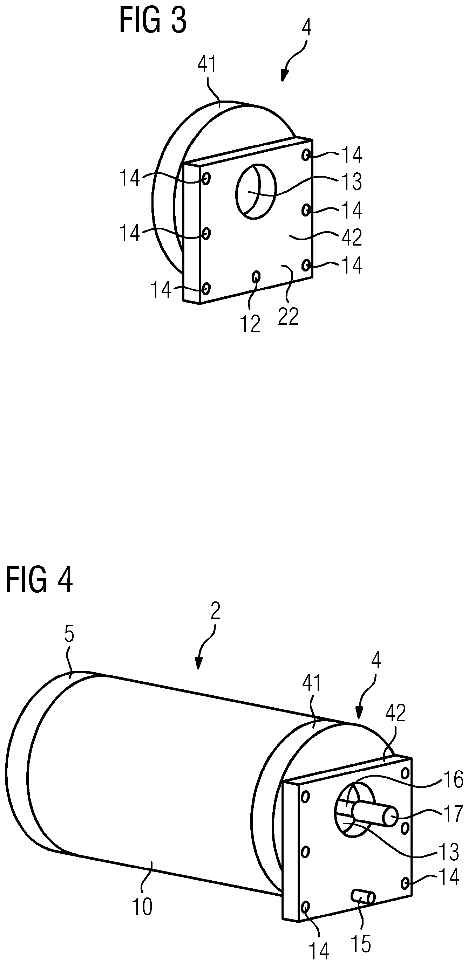

Fig. 3 ist eine Schrägansicht des A-seitigen Motorlagerschildes 4 von Fig. 1. Der motorseitige Abschnitt 41 weist nicht dargestellte Befestigungsvorrichtungen zur Befestigung an dem Statorgehäuse 10 auf, z.B. Durchgangslöcher zum Durchführen von Schraubbolzen, mittels derer das A-seitige Motorlagerschild 4 am Statorgehäuse 10 befestigt werden kann. Der getriebeseitige Abschnitt 42 weist entlang seinen beiden vertikal verlaufenden Seiten durchgehende Bohrlöcher 14 zum Einstecken von Verbindungsbolzen 8 auf, die in der getriebeseitigen Stirnseite 22 münden. Mithilfe der durchgehende Bohrlöcher 14 kann das A-seitige Motorlagerschild 4 mit dem Getriebegehäuse 11 verschraubt werden.

Das A-seitige Motorlagerschild 4 weist eine Durchgangsöffnung 13 auf, zum Durchstecken einer Motorwelle des Elektromotors 2.

Der getriebeseitige Abschnitt 42 weist am unteren Rand seiner getriebeseitigen Stirnseite 22, in der Mitte der bodenseitigen horizontalen Kante, ein Stiftloch 12 auf, d.h. ein Durchgangs- oder Sackloch zum Einsetzen eines Stifts. Die Funktion des Stiftlochs 12 wird in Fig. 4 näher erläutert.

Fig. 4 zeigt eine Schrägansicht eines Elektromotors 2 mit einem A-seitigen Motorlagerschild 4 gemäß Fig. 3. Eine Motorwelle 16, an deren Ende ein Ritzel 17 befestigt ist, ragt durch die Durchgangsöffnung 13 des A-seitigen Motorlagerschildes 4. In das Stiftloch 12 am unteren Rand der getriebeseitigen Stirnseite 22 des getriebeseitigen Abschnitt 42 des A-seitigen Motorlagerschildes 4 ist ein Stift 15 eingesetzt. Er dient als Drehpunkt für das Getriebegehäuse 11 relativ zum A-seitigen Motorlagerschild 4. Dazu wird der Stift 15 in ein Stiftloch an der dem Elektromotor 2 zugewandten, offenen Stirnseite des Getriebegehäuses 11 gesteckt.

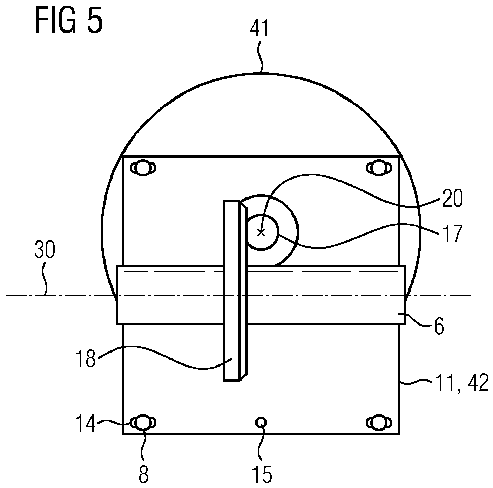

Fig. 5 zeigt eine schematische Ansicht, entlang der Achse 20 der Motorwelle, auf das in Blickrichtung hinter dem Getriebegehäuse 11 angeordnete A-seitige Motorlagerschild 4, aufweisend den motorseitigen Abschnitt 41 und den in Deckung mit dem Getriebegehäuse 11 liegenden getriebeseitigen Abschnitt 42. Dabei kann das Getriebegehäuse 11 um den Stift 15, der sowohl in einem Stiftloch in dem getriebeseitigen Abschnitt 42 des A-seitigen Motorlagerschilds 4 als auch in einem Stiftloch des Getriebegehäuses 11 eingeführt ist, als Drehpunkt gegenüber dem getriebeseitigen Abschnitt 42 des A-seitigen Motorlagerschilds 4 verdreht werden. Die relative Verdrehung wird so eingestellt, dass das Ritzel 17 mit einem definierten Spiel mit dem um die Wellenachse 30 drehbar gelagerten Zahnrad 18 des Hypoidgetriebes, einem Tellerrad, kämmt. In der definierten Relativposition werden die Verbindungsbolzen 8, welche durch eine Verdrehung gestattende, als Langlöcher ausgebildete durchgehende Bohrlöcher 14 des Getriebegehäuses 11 geführt sind, fest angezogen und somit die gewünschte Position zwischen dem Getriebegehäuse 11 und dem A-seitige Motorlagerschild 4 gesichert.

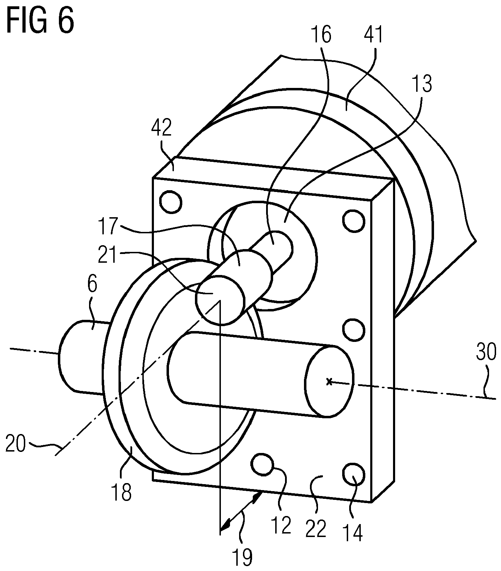

Fig. 6 zeigt eine Schrägansicht eines mit einem Tellerrad 18 kämmenden Ritzels 17. Die durch eine Durchgangsöffnung 13 im A-seitigen Motorlagerschild 41, 42 ragende Motorwelle 16 trägt an ihrer Spitze ein Ritzel 17, welches mit einem senkrecht zur Motorwelle 16 um die Abtriebswelle 6 drehbar gelagerten Tellerrad 18 kämmt. Für eine definierte axiale Positionierung des Ritzels 17 auf der Motorwelle 16 wird die Stirnseite 22 des getriebeseitigen Abschnitts 42 des A-seitigen Motorlagerschildes 41, 42 als Bezugsebene gewählt. Dabei wird das Ritzel 17 soweit in die Motorwelle 16 eingepresst, bis ein definierter Abstand 19 zwischen dem Ritzel 17, z.B. der Stirnfläche 21 des Ritzels 17, und dem A-seitigen Motorlagerschild 41, 42, z.B. der Stirnseite 22 des getriebeseitigen Abschnitts 42 des A-seitigen Motorlagerschildes 41, 42, erreicht ist.

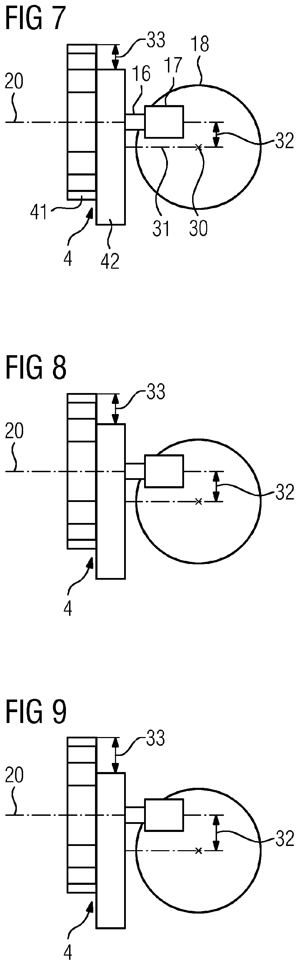

Fig. 7 bis 9 zeigen drei verschiedene A-seitige Motorlagerschilder 4, die eine Baureihe bilden. Die A-seitige Motorlagerschilder 4 unterscheiden sich darin, dass der Höhenversatz 33 zwischen dem motorseitigen Abschnitt 41 und dem getriebeseitigen Abschnitt 42 von Fig. 7 bis Fig. 9 zunimmt. Einerseits bleiben die Lagerung der Motorwelle 16 und somit die Positionen der Motorwellenachse 20 und des Ritzels 17 in Bezug auf den motorseitigen Abschnitt 41 unverändert. Andererseits bleiben die Positionen der Abtriebswellenachse 30 und des Zahnrads 18 in Bezug auf den getriebeseitigen Abschnitt 42 unverändert. Folglich führt die oben erwähnte Variation des Höhenversatzes 33 zwischen dem motorseitigen Abschnitt 41 und dem getriebeseitigen Abschnitt 42 zu einer entsprechenden Variation der Lage des Ritzels 17 in Bezug auf das Zahnrad 18, d.h. zu einer entsprechenden Variation des Achsversatzes 32.

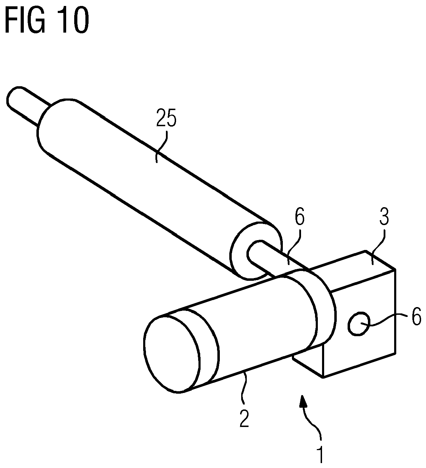

Fig. 10 zeigt einen Winkelgetriebemotor 1, aufweisend einen Elektromotor 2 und ein damit verbundenes Winkelgetriebe 3. Die schnelle Rotation einer Motorwelle des Elektromotors 2 wird durch das Winkelgetriebe 3 in eine langsamere und um 90 Grad gedrehte Rotation einer Abtriebswelle 6 des Winkelgetriebes 3 übersetzt. Die Abtriebswelle 6 des Winkelgetriebes 3 ist drehfest mit einer Antriebsrolle 25 einer Rollenbahn verbunden, zum Transport von Stückgütern wie Paketen, Koffern, Paletten oder Kisten .

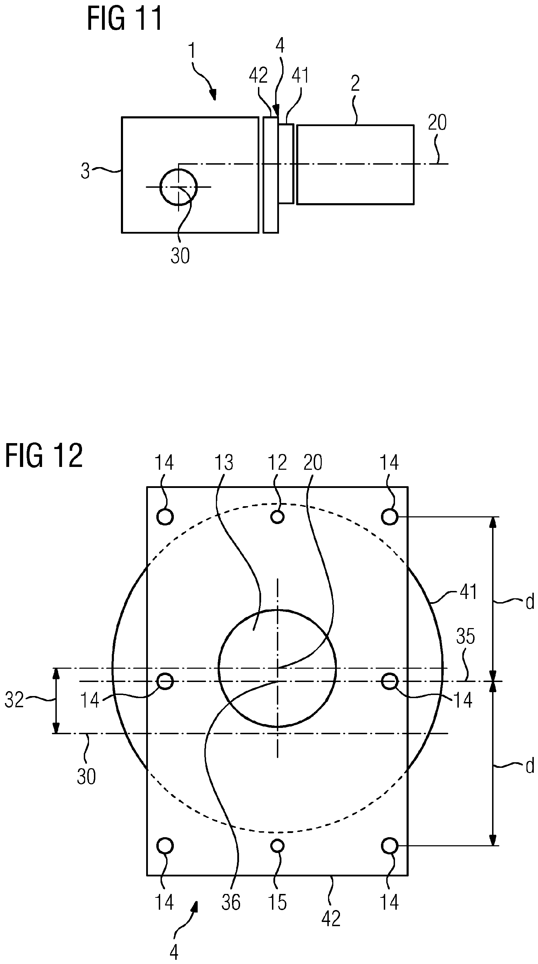

Fig. 11 zeigt eine Seitenansicht eines Hypoid-Getriebemotors 1, umfassend einen Elektromotor 2 und ein mit dem Elektromotor 2 verbundenes Winkelgetriebe 3, mit einem ersten, größeren Achsversatz zwischen einer Wellenachse 2 des Elektromotors 2 und einer Wellenachse 30 des Winkelgetriebes 3. Dabei ist das getriebeseitige Motorlagerschild 4 des Elektromotors 2, umfassend einen kreisrunden motorseitigen Abschnitt 41 und einen rechteckigen getriebeseitigen Abschnitt 42, welcher gemäß seiner Funktion auch als Getriebemontageplatte bezeichnet wird, in einer ersten Montageorientierung angeordnet.

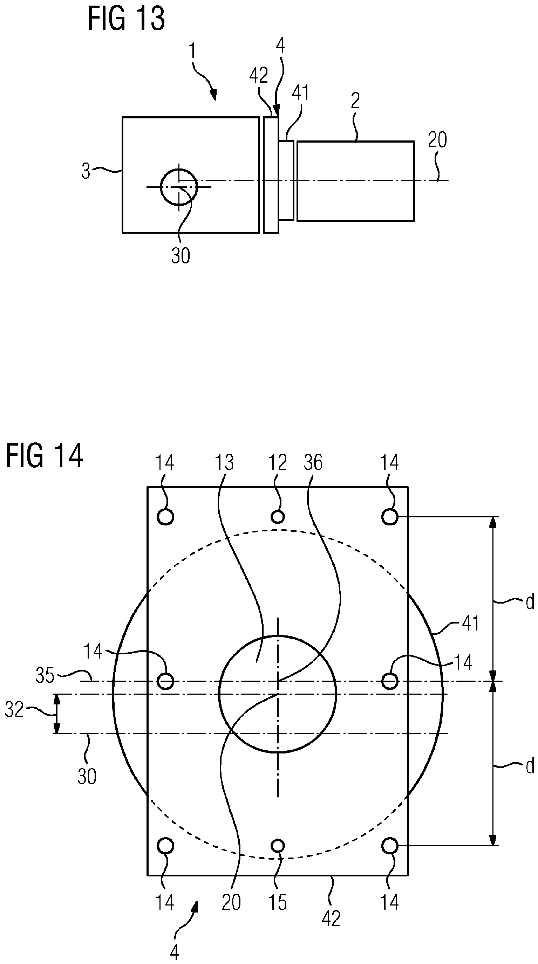

Fig. 13 zeigt eine Seitenansicht eines zweiten Hypoid-Getriebemotors 1, der sich nur insofern von dem Hypoid-Getriebemotor 1 aus Fig. 11 unterscheidet, als das getriebeseitige Motorlagerschild 4 in einer zweiten Montageorientierung angeordnet ist. Dabei ergibt sich die zweite Montageorientierung aus der ersten Montageorientierung durch eine Drehung des getriebeseitige Motorlagerschild 4 in der Lagerschildebene um 180 Grad.

Fig. 12, welche eine Draufsicht der Getriebemontageplatte 4 gemäß Fig. 11 zeigt, stellt die erste Montageorientierung des getriebeseitige Motorlagerschilds 4 dar. Von der Getriebemontageplatte 4 teilweise verdeckt ist in der Draufsicht auch der kreisrunde motorseitige Abschnitt 41 des getriebeseitigen Motorlagerschilds 4 zu erkennen.

Die Getriebemontageplatte 42 des getriebeseitigen Motorlagerschilds 4 weist entlang ihres Umfanges sechs durchgehende Bohrlöcher 14 auf, wobei das Lochbild der durchgehende Bohrlöcher 14 symmetrisch bezüglich einer Symmetrielinie 35 ist. Jeweils drei Bohrlöcher 14 sind voneinander im Abstand d äquidistant entlang einer Längsseite angeordnet. An den Schmalseiten der Getriebemontageplatte 42 ist jeweils ein Stiftloch 12 mittig zwischen zwei Bohrlöchern 14 angeordnet. Dabei ist in das untere Stiftloch 12 ein Stift 15 eingesetzt.

Die Durchgangsöffnung 13 des getriebeseitigen Motorlagerschilds 4, deren Mittelpunkt auf der Wellenachse 20 des Elektromotors 2 liegt, ist um einen ersten, größeren Achsabstand 32 gegen die Wellenachse 30 des Getriebes 3 versetzt. Dabei verläuft die Symmetrielinie 35 des Lochbilds zwischen der Wellenachse 20 des Elektromotors 2 und der Wellenachse 30 des Getriebes 3.

Fig. 14, welche eine Draufsicht der Getriebemontageplatte 4 gemäß Fig. 13 zeigt, stellt die zweite Montageorientierung des getriebeseitige Motorlagerschilds 4 dar, welche sich aus der in Fig. 12 gezeigten ersten Montageorientierung durch eine Drehung des getriebeseitige Motorlagerschild 4 in der Lagerschildebene bzw. um die Wellenachse 20 des Motors 2 um 180 Grad ergibt.

Von der in Fig. 12 dargestellten ersten Montageorientierung unterscheidet sich die in Fig. 14 dargestellte zweite Montageorientierung darin, dass die Durchgangsöffnung 13 des getriebeseitigen Motorlagerschilds 4, deren Mittelpunkt auf der Wellenachse 20 des Elektromotors 2 liegt, um einen zweiten, kleineren Achsabstand 32 gegen die Wellenachse 30 des Getriebes 3 versetzt ist und die Wellenachse 20 des Elektromotors 2 zwischen der Symmetrielinie 35 des Lochbilds und der Wellenachse 30 des Getriebes 3 verläuft.

## Patentansprüche

1. Winkelgetriebemotor (1), aufweisend
ein Getriebegehäuse (11), in dem ein Zahnrad (18) drehbar gelagert ist,
ein getriebeseitiges Motorlagerschild (4), durch das eine Motorwelle (16) mit einem darauf befestigten Ritzel (17) ragt, eine Schnittstelle (22) zwischen dem Getriebegehäuse (11) und dem getriebeseitigen Motorlagerschild (4), und **gekennzeichnet durch**
einen im Motorlagerschild (4) befestigten Stift (15), welcher als ein Drehpunkt zur Verdrehung des Getriebegehäuses (11) relativ zum Motorlagerschild (4) dient.

2. Verfahren zum Einstellen eines definierten Spiels zwischen einem Ritzel (17) und einem Zahnrad (18), insbesondere einem Tellerrad, eines Winkelgetriebemotors (1) nach Anspruch 1, mit folgenden Schritten:
Verdrehen des Getriebegehäuses (11), bis das Ritzel (17) ohne Spiel an dem Zahnrad (18) anliegt, wodurch eine Null-Position definiert ist; und
Verdrehen des Getriebegehäuses (11) aus der Null-Position um einen vorgegebenen Winkel um den als Drehpunkt wirkenden Stift (15), wobei die Winkelverdrehung dem definierten Spiel entspricht.

3. Verfahren nach Anspruch 2, wobei das Verdrehen des Getriebegehäuses (11) um einen vorgegebenen Winkel dadurch erfolgt, dass das Getriebegehäuse (11) bis zu einer korrespondierenden vorgegebenen Markierung auf einer Außenseite des getriebeseitigen Motorlagerschilds (4) verdreht wird.

## Claims

1. Angle geared motor (1), having
a gear housing (11), in which a toothed wheel (18) is rotatably mounted,
a gear-side motor end shield (4), through which a motor shaft (16) having a pinion (17) fastened thereto protrudes,
an interface (22) between the gear housing (11) and the gear-side motor end shield (4), and
**characterised by**
a pin (15), which is fastened in the motor end shield (4) and which serves as a pivot point for the rotation of the gear housing relative to the motor end shield (4).

2. Method for setting a defined play between a pinion (17) and a toothed wheel (18), in particular a crown gear, of an angle geared motor (1) according to claim 1, having the following steps:
rotating the gear housing (11) until the pinion (17) rests without play on the toothed wheel (18), whereby a zero position is defined, and
rotating the gear housing (11) from the zero position about a predefined angle, about the pin (15) acting as a pivot point, wherein the angular rotation corresponds to the defined play.

3. Method according to claim 2, wherein the gear housing (11) is rotated about a specified angle in that the gear housing (11) is rotated up to a corresponding, predefined marking on an outer side of the gear-side motor end shield (4).

## Revendications

1. Motoréducteur (1) angulaire, comportant
un carter (11) de réducteur, dans lequel une roue (18) dentée est montée tournante,
un flasque (4) du moteur du côté du réducteur, duquel dépasse un arbre (6) du moteur ayant un pignon (17) qui y est fixé, une interface (22) entre le carter (11) du réducteur et le flasque (4) du moteur du côté du réducteur, et
**caractérisé par**
une cheville (15), qui est fixée au flasque (4) du moteur et qui sert de point de rotation pour la rotation du carter (11) du réducteur par rapport au flasque (4) du moteur.

2. Procédé de réglage d'un jeu défini entre un pignon (17) et une roue (18) dentée, notamment une roue couronne, d'un motoréducteur (1) angulaire suivant la revendication 1, comprenant les stades suivants :
on fait tourner le carter (11) du réducteur jusqu'à ce que le pignon (17) s'applique sans jeu à la roue (18) dentée, en définissant ainsi une position zéro ; et
on fait tourner le carter (11) du réducteur de la position zéro d'un angle donné à l'avance autour de la cheville (15) servant de point de rotation, la rotation angulaire correspondant au jeu défini.

3. Procédé suivant la revendication 2, dans lequel la rotation du carter (11) du réducteur d'un angle donné à l'avance s'effectue en faisant tourner le carter (11) du réducteur jusqu'à un repère correspondant donné à l'avance sur une face extérieur du flasque (4) du moteur du côté du réducteur.
